# EUROPEAN PATENT APPLICATION

(11) **EP 3 863 263 A1**
(43) Date of publication of application: **11.08.2021**
(21) Application number: 19876784.0
(22) Date of filing: 11.09.2019
(51) Int. Cl.: H04M 1/02

(54) **ROTATING SHAFT MECHANISM AND FOLDABLE ELECTRONIC DEVICE**

(30) Priority: 26.10.2018 CN 201811261871; 26.10.2018 CN 201821748850 U
(71) Applicant: GUANGDONG OPPO MOBILE TELECOMMUNICATIONS CORP., LTD., Dongguan, Guangdong 523860 (CN)
(72) Inventor: CHENG, Jiao, Dongguan, Guangdong 523860 (CN); WU, Shoukuan, Dongguan, Guangdong 523860 (CN); ZENG, Chuanhua, Dongguan, Guangdong 523860 (CN)
(74) Representative: Ipside
(86) International application number: PCT/CN2019/105476
(87) International publication number: WO 2020/082927

(57) **Abstract**

The present application relates to a foldable electronic device and a rotating shaft mechanism thereof. The electronic device comprises a first housing, a second housing and a foldable screen. The rotating shaft mechanism comprises a rotating shaft frame a guide member, a support plate, an elastic member and two rotating arms. The guide member and the support plate are connected to the rotating shaft frame, and the elastic member is arranged between the rotating shaft frame and the guide member. The two rotating arms are rotatably arranged at the two ends of the rotating shaft frame respectively and can rotate relative to each other in a folded or unfolded form, and at least one of the two rotating arms abuts against the guide member. The first housing and the second housing are respectively connected to the two rotating arms, and the foldable screen is connected to the first housing and the second housing. When the first housing and the second housing rotate and fold relative to each other, the guide member is driven by at least one of the two rotating arms and protrudes to the side where the foldable screen deviates from the support plate. The present rotating shaft mechanism can protect the foldable screen when the foldable screen is folded, so as to avoid damage to the foldable screen due to irregular deformation thereof.

## Description

### TECHNICAL FIELD

The present disclosure relates to the technical field of electronic devices, and in particular to a rotating shaft mechanism and a foldable electronic device.

### BACKGROUND

In an existing foldable electronic device, such as a foldable mobile phone, a display screen of the mobile phone may be folded in half, such that the mobile phone is miniaturized to facilitate a user to carry. A conventional folding mobile phone usually includes a first housing and a second housing that are pivotally connected to each other, and a flexible display screen covering a side of the first housing and the second housing. The first housing and the second housing can be turned into a superposed state, and the flexible display screen is in a folded state. However, since the edge of the flexible display screen is usually fixedly connected to the first housing and the second housing, when the flexible display screen is folded in half, the substantially central area of the display screen is subjected to squeezing pressure from its edges as well as from the first and second housings, and as a result an arching deformation occurs. The direction of the arching deformation is opposite to the folding direction, resulting in the flexible display being prone to creasing or even delamination, which affects the appearance of the mobile phone, leads to the failure of the flexible display screen, and reduce the life of the flexible display screen.

### SUMMARY OF THE DISCLOSURE

Embodiments of the present disclosure provide a foldable electronic device and a rotating shaft mechanism thereof, in order to solve the above technical problems.

The present disclosure provides a rotating shaft mechanism, applied to a foldable electronic device and including: a rotating shaft bracket; a guide member, movably connected to the rotating shaft bracket; an elastic member, disposed between the guide member and the rotating shaft bracket; and two rotating arms, rotatably arranged on opposite two ends of the rotating shaft bracket respectively; wherein at least one of the two rotating arms abuts against the guide member; when the two rotating arms rotate relative to the rotating shaft bracket and move closer to each other, the guide member is driven to protrude out of the rotating shaft bracket.

The present disclosure provides a foldable electronic device, including a rotating shaft mechanism as described above, a first housing and a second housing, and a foldable screen. The rotating shaft mechanism further includes a support plate connected to the rotating shaft bracket. The first housing and the second housing are connected to the two rotating arms respectively. The first housing and the second housing are in a folded state or an unfolded state through a rotation of the two rotating arms. The foldable screen is connected to the first housing and the second housing, and stacked on the support plate. When the first housing and the second housing are in the folded state through the relative rotation of the two rotating arms, the guide member is driven by at least one of the two rotating arms to protrude to a side of the foldable screen facing away from the support plate.

The present disclosure provides a rotating shaft mechanism, applied to a foldable electronic device and including: a rotating shaft bracket; a guide member, movably connected to the rotating shaft bracket; an elastic member, disposed between the guide member and the rotating shaft bracket; two rotating arms, rotatably arranged on opposite two ends of the rotating shaft bracket respectively; wherein the two rotating arms are capable of rotating relative to the rotating shaft bracket to be in a folded state or an unfolded state; at least one of the two rotating arms abuts against the guide member; and a support plate, connected to the rotating shaft bracket; wherein when the two rotating arms rotate relatively to be in the folded state, the guide member is driven to protrude out of the rotating shaft bracket and to be relatively spaced apart with the support plate.

In the foldable electronic device and the rotating shaft mechanism thereof provided by the embodiments of the present disclosure, when the foldable screen is disposed on the housing assembly and the rotating shaft mechanism, and when the first housing and the second housing are folded through the relative rotation of the two rotating arms, the guide member is driven by at least one of the two rotating arms to protrude to being above the foldable screen (for example, being opposite to or in contact with the foldable screen). The guide member can thus block the tendency of the foldable screen to produce a backward deformation with the arch of the rotating shaft mechanism, forcing the foldable screen to be concavely deformed toward the rotating shaft mechanism. In this way, the deformation of the foldable screen that does not conform to its bending tendency may be limited, thereby guiding the bending direction of the foldable screen. Therefore, the above-mentioned rotating shaft mechanism can protect the foldable screen when the foldable screen is folded, limit the damage caused by irregular deformation of the foldable screen, and extend the service life of the foldable screen.

### BRIEF DESCRIPTION OF THE DRAWINGS

To further illustrate technical solutions of the present disclosure, drawings needed for description of the embodiments will be briefly introduced. Obviously, the following drawings are only some embodiments of the present disclosure. To a person skilled in the art, other drawings may be obtained without any creative work based on the following drawings.
FIG. 1 is a perspective schematic view of an electronic device according to an embodiment of the present disclosure.
FIG. 2 is an exploded schematic view of an electronic device according to an embodiment of the present disclosure.
FIG. 3 is a perspective schematic view of a rotating shaft mechanism of the electronic device as shown in FIG. 2.
FIG. 4 is another perspective schematic view of a rotating shaft mechanism of the electronic device as shown in FIG. 2.
FIG. 5 is an exploded schematic view of the rotating shaft mechanism as shown in FIG. 4.
FIG. 6 is an enlarged schematic view of the area VI of the rotating shaft mechanism as shown in FIG. 4.
FIG. 7 is a schematic view of an assembly of a foldable screen and the rotating shaft mechanism as shown in FIG. 4.
FIG. 8 is a schematic view of the rotating shaft mechanism as shown in FIG. 4 in a folded state at a first angle.
FIG. 9 is a schematic view of a foldable screen and the rotating shaft mechanism as shown in FIG. 8 in a folded state at a second angle.
FIG. 10 is another perspective schematic view of the electronic device as shown in FIG. 1.

### DETAILED DESCRIPTION

The technical solutions provided by the present disclosure will be described clearly and completely by referring to the drawings in the embodiments. Obviously, the described embodiments are only part of the embodiments of the present disclosure, but not all the embodiments. Based on the embodiments in the present disclosure, all other embodiments obtained by a person skilled in the art without creative work fall within the scope of the present disclosure.

The "communication terminal" (or "terminal" for short) and "electronic device" used in the embodiments of the present disclosure include, but are not limited to devices for receiving/transmitting communication signals via a wired line connection (such as public switched telephone network (PSTN), digital subscriber line (DSL), digital cable, direct cable connection, and/or another data connection/network) and/or via a wireless interface (such as cellular network, wireless local area network (WLAN), digital television networks such as DVB-H network, satellite network, AM-FM broadcast transmitter, and/or a wireless interface of another communication terminal). The communication terminal configured to communicate through a wireless interface may be referred to as a "wireless communication terminal", a "wireless terminal", and/or a "mobile terminal". Examples of mobile terminals and electronic devices include, but are not limited to, satellites or cellular phones; personal communication system (PCS) terminals that can combine cellular radiotelephones with data processing, facsimile, and data communication capabilities; PDAs including radiotelephones, pagers, Internet/internal network access, Web browsers, notepads, calendars, and/or global positioning system (GPS) receivers; and conventional lap-top and/or palm-top receivers or other electronic devices including radiotelephone transceivers.

In each embodiment of the present disclosure, the type of the electronic device is not limited. A common placement method of the electronic device in use is taken as a reference placement method. A side of the electronic device facing the user is a "front side", and a side facing away from the user is a "back side". A "top side" refers to a part near the upper edge of the electronic device, and a "bottom side" refers to a part near the lower edge of the electronic device. The technical solutions in the embodiments of the present disclosure will be described clearly and completely in conjunction with the drawings in the embodiments of the present disclosure.

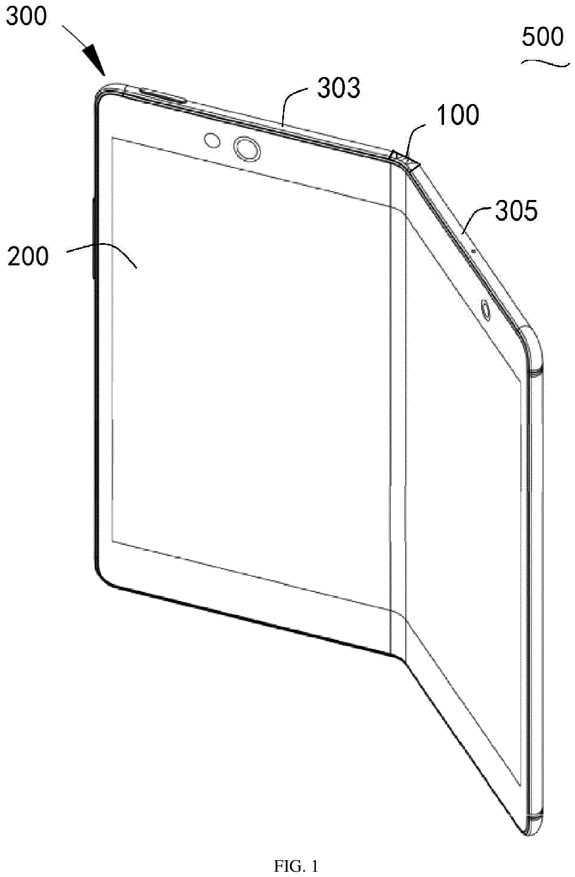

Referring to FIG. 1, an embodiment of the present disclosure provides an electronic device 500. The electronic device 500 may be, but not limited to, a mobile phone, a tablet computer, a smart watch, and other electronic devices. The electronic device 500 of the embodiment will be described with a mobile phone as an example.

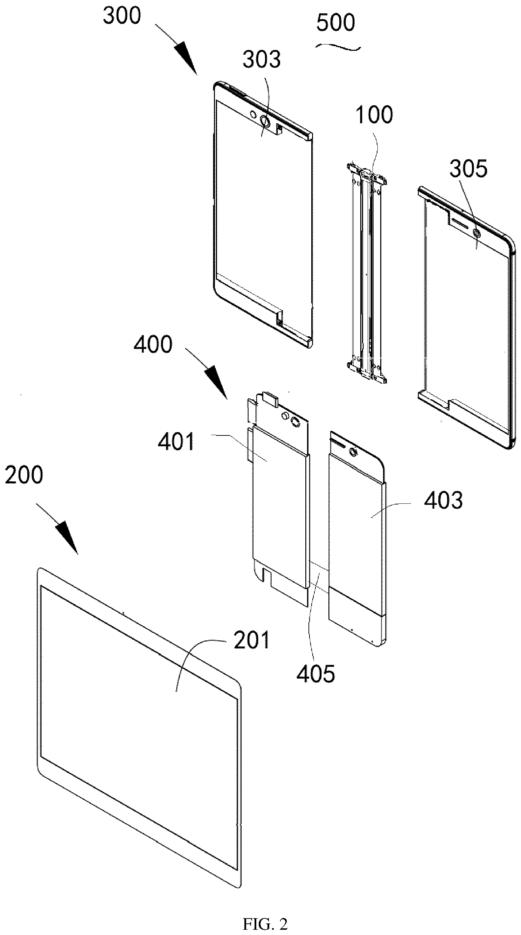

Referring to FIG. 1 and FIG. 2, the electronic device 500 includes an electronic assembly 400, a housing assembly 300, a foldable screen 200, and a rotating shaft mechanism 100. The electronic assembly 400 and the rotating shaft mechanism 100 are disposed in the housing assembly 300. The foldable screen 200 is laid on the housing assembly 300 and the rotating shaft mechanism 100. The housing assembly 300 and the foldable screen 200 can be folded or unfolded via the rotating shaft mechanism 100. When the housing assembly 300 and the foldable screen 200 are in a folded state, the volume of the electronic device 500 is relatively small, which is convenient for storage and carrying.

The housing assembly 300 includes a first housing 303 and a second housing 305. The first housing 303 and the second housing 305 are connected to both sides of the rotating shaft mechanism 100, respectively. The second housing 305 can be folded or unfolded relative to the first housing 303. The housing assembly 300 is configured to carry the foldable screen 200 and protect the electronic assembly 400. The first housing 303 and the second housing 305 respectively support two ends of the foldable screen 200. The rotating shaft mechanism 100 can be folded or unfolded, and supports a portion of the flexible display screen 201 between the two ends. In some embodiments, the first housing 303 may be a hard housing, and the second housing 305 may also be a hard housing. The first housing 303 and the second housing 305 can firmly support the both ends of the flexible display screen 201.

The rotating shaft mechanism 100 can be deformed as the second housing 305 is folded or unfolded relative to the first housing 303, and may restrict the second housing 305 from being separated from the first housing 303. The rotating shaft mechanism 100 is also configured to support the foldable screen 200 such that the foldable screen 200 may not collapse. The two opposite sides of the rotating shaft mechanism 100 are respectively connected to the first housing 303 and the second housing 305. The rotating shaft mechanism 100 has rotatable characteristics, such that the first housing 303 may be turned over relative to the second housing 305. In this way, the first housing 303 may be in a superposed state, an angled state, or an unfold state relative to the second housing 305.

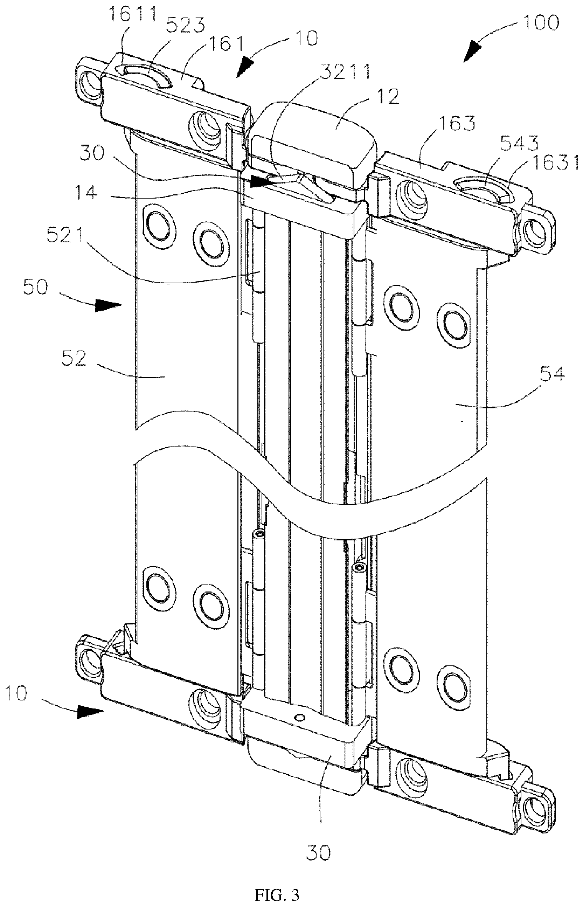

Referring to FIGS. 3 to 5, the rotating shaft mechanism 100 includes a rotating shaft assembly 10 and a guide assembly 30. The rotating shaft assembly 10 is connected to the housing assembly 300, and the guide assembly 30 is connected to the rotating shaft assembly 10.

The rotating shaft assembly 10 includes a fixing member 12, a rotating shaft bracket 14 and rotating arms 16. The fixing member 12 is disposed between the first housing 303 and the second housing 305, and is configured to mount the rotating arms 16. The rotating shaft bracket 14 is arranged substantially in parallel with the fixing member 12 and is configured to connect the rotating arms 16 and the guide assembly 30.

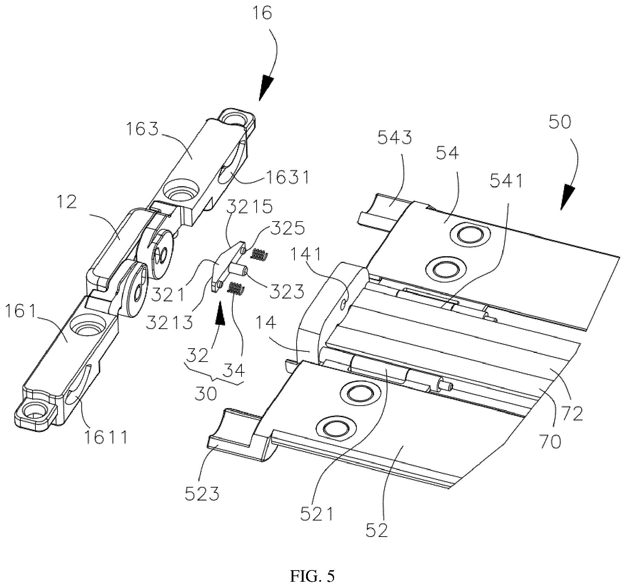

The number of the rotating arms 16 is two. The two rotating arms 16 are respectively rotatably connected to opposite ends of the rotating shaft bracket 14. Specifically in the embodiment shown in FIG. 5, the two rotating arms 16 include a first rotating arm 161 and a second rotating arm 163. An end of the first rotating arm 161 is disposed between the fixing member 12 and the rotating shaft bracket 14 and is rotatably connected to the fixing member 12. The other end of the first rotating arm 161 extends away from the rotating shaft bracket 14 and is connected to the first housing 303. An end of the second rotating arm 163 is disposed between the fixing member 12 and the rotating shaft bracket 14 and is rotatably connected to the fixing member 12, and the other end of the second rotating arm 163 extends away from the rotating shaft bracket 14 and is connected to the second housing 305. The first rotating arm 161 and the second rotating arm 163 may be capable of rotating relative to the rotating shaft bracket 14 and the fixing member 12 under the action of external force. In this way, the first rotating arm 161 and the second rotating arm 163 may move closer to each other to be in a folded state; or, the first rotating arm 161 and the second rotating arm 163 may move away from each other to be in an unfolded state. In this way, the first housing 303 and the second housing 305 can be relatively folded or unfolded smoothly.

The guide assembly 30 is movably connected to the rotating shaft bracket 14 and is configured to guide the folding state of the foldable screen 200, such that the foldable screen 200 may be bent and deformed in a predetermined direction in the folded state to avoid abnormal arching or bending deformation of the foldable screen 200 when folded. The guide assembly 30 may include a guide member 32 and an elastic member 34. The guide member 32 is disposed between the rotating shaft bracket 14 and the fixing member 12, and the elastic member 34 is disposed between the guide member 32 and the elastic member 34.

Further, the guide member 32 can movably cooperate with the rotating shaft bracket 14 and slide relative to the rotating shaft bracket 14 in a direction restricted by the rotating shaft bracket 14. The guide member 32 abuts against the first rotating arm 161 and/or the second rotating arm 163. When the first rotating arm 161 and/or the second rotating arm 163 rotates relative to the rotating shaft bracket 14 and moves closer to each other, the first rotating arm 161 and/or the second rotating arm 163 pushes against the guide member 32, such that the guide member 23 protrudes out of the rotating shaft bracket 14 (for example, the guide member 23 protrudes from a side of the rotating shaft bracket 14 facing away from the fixing member 12).

The guide member 32 may include a body 321 and a guide portion 323 connected to the body 321.

In the embodiments shown in FIG. 5, the shape of the body 321 is substantially triangular. The body has a driven surface 3211 (shown in FIG. 3). The driven surface 3211 is disposed on a side of the body 321 facing the fixing member 12, and abuts against the first rotating arm 161 and/or the second rotating arm 163. In this way, the first rotating arm 161 and/or the second rotating arm 163 may push against the driven surface 3211, thereby driving the guide member 32 to move. When the guide member 32 cooperates with the rotating shaft bracket 14 slidingly, the guide member 32 may slide in a direction substantially parallel to a rotation axis of the rotating arms 16.

In the embodiments, the driven surface 3211 is substantially flat, and is inclined relative to the sliding direction of the guide member 32. That is, the driven surface 3211 and the sliding direction of the guide member 32 form a certain angle (for example, an acute angle). Further, the number of the driven surface 3211 is two, and the two driven surfaces 3211 include a first driven surface 3213 and a second driven surface 3215. In some embodiments, the first driven surface 3213 and the second driven surface 3215 are connected, and a predetermined included angle is formed between the two. The predetermined included angle may be an obtuse angle.

Further, the first driven surface 3213 and the second driven surface 3215 are substantially symmetrically disposed on the body 321. The first driven surface 3213 is disposed on a side of the body 321 near the first rotating arm 161 and abuts against the first rotating arm 161. The second driven surface 3215 is disposed on a side of the body 321 near the second rotating arm 163, and abuts against the second rotating arm 163. When the two rotating arms 16 rotate relative to the rotating shaft bracket 14, the rotating arms 16 respectively slide on the corresponding driven surfaces 3211 to push the guide member 32 to slide relative to the rotating shaft bracket 14. It can be understood that, in other embodiments, the number of the driven surface 3211 may be one, and the driven surface 3211 may abut against any one of the two rotating arms 16 such that the rotating arm 16 may push against the driven surface 3211, thereby driving the guide member 32 to move.

The guide portion 323 is disposed on a side of the body 321 facing away from the driven surface 3211, and slidingly cooperates with the rotating shaft bracket 14 to extend from a side of the rotating shaft bracket 14 facing away from the body 221 when the guide member 32 slides relative to the rotating shaft bracket 14. In this way, a deformation direction of the foldable screen 200 is guided to avoid the arch deformation of the foldable screen 200. In the embodiments, the guide portion 323 is substantially a convex column structure protruding and formed on a surface of the body 321. The guide portion 323 is movably penetrated on the rotating shaft bracket 14.

In order to restrict the sliding direction of the guide portion 323, the rotating shaft bracket 14 defines a through hole 141. An axial direction of the through hole 141 is substantially parallel to the rotation axis of the rotating arm 16. The through hole 141 penetrates the rotating shaft bracket 14. The guide portion 323 may protrude movably into the through hole 141. It can be understood that, in other embodiments, the through hole 141 of the rotating shaft bracket 14 may be replaced with another type of guide structure. For example, the rotating shaft bracket 14 may define a guide groove, and the guide portion 323 may slidingly cooperates with the guide groove. Or, the guide portion 323 and the rotating shaft bracket 14 may realize a sliding cooperation through a guide rail and a guide groove.

The elastic member 34 is disposed between the body 321 and the rotating shaft bracket 14, and is configured to provide a restoring force for the guide member 32 to move. Specifically in the embodiments, the elastic members 34 may be coil springs, the number of which may be two. The two elastic members 34 are respectively disposed on both sides of the guide portion 323. Both ends of each elastic member 34 abut against the body 321 and the rotating shaft bracket 14 respectively, and apply a pushing force to the body 321 away from the rotating shaft bracket 14. When the two rotating arms 16 rotate relative to the rotating shaft bracket 14 and move closer to each other, the body 321 approaches the rotating shaft bracket 14 under the driving of the rotating arms 16, such that the guide portion 323 protrudes from the rotating shaft bracket 14 through the through hole 141. The elastic members 34 are compressed. When the two rotating arms 16 rotate relative to the rotating shaft bracket 14 and move away from each other, the elastic members 34 recover the deformation and apply the elastic restoring force on the body 321 to move the body 321 away from the rotating shaft bracket 14 while the guide portion 323 retracts and resets into the through hole 141.

In order to effectively position the elastic member 34 and avoid the deviation of the elastic member 34 during the deformation process, the guide member 32 further includes a positioning portion 325, which is a convex pillar structure connected to the body 321. The elastic member 34 is sleeved on the positioning portion 325. Further, in some embodiments, the rotating shaft bracket 14 may further define a positioning hole (not shown in the figure) corresponding to the positioning portion 325. The positioning hole may be a blind hole structure, which is substantially coaxial with the positioning portion 325. An end of the elastic member 34 is sleeved on the positioning portion 325, and the other end is received in the positioning hole.

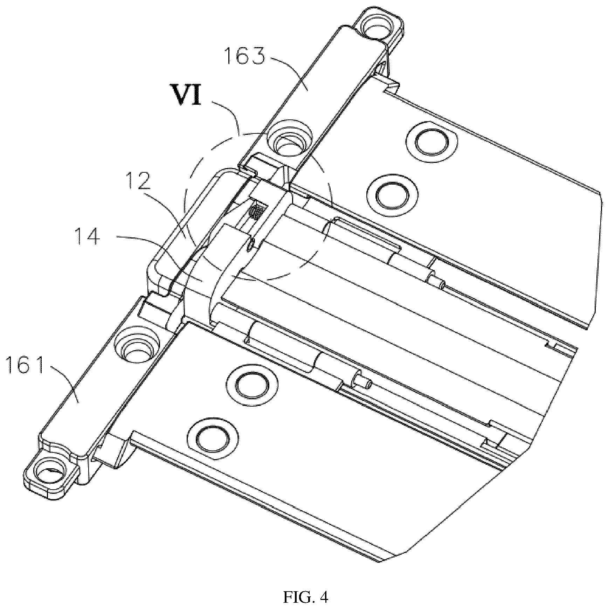

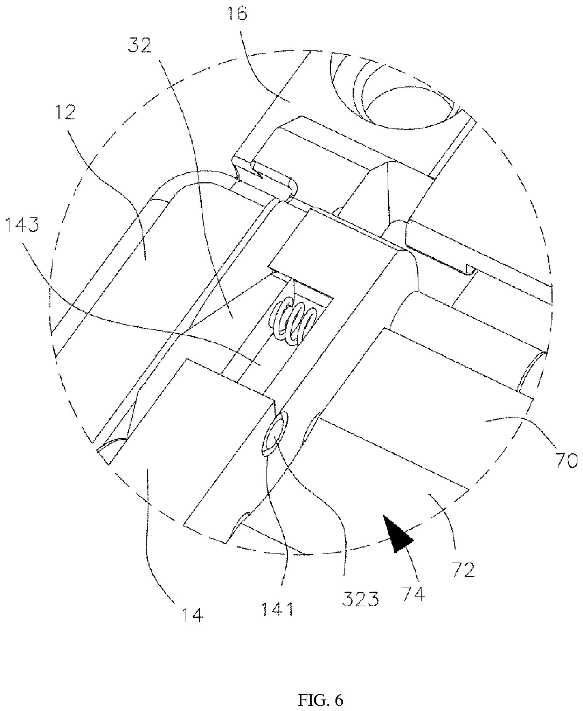

Referring to FIGS. 4 and 6, in the embodiments, the rotating shaft bracket 14 further defines a receiving groove 143. The receiving groove 143 is defined on a side of the rotating shaft bracket 14 facing the fixing member 12. The receiving groove 143 is configured to receive the guide member 32 and provide sufficient movement space for the guide member 32, such that the structure of the rotating shaft mechanism 100 is more compact. In the illustrated embodiments, the guide member 32 and the elastic member 34 are both disposed in the receiving groove 143.

Referring to FIGS. 2 and 3, in the embodiments, when the rotating shaft mechanism 100 is disposed in the housing assembly 300, the rotating shaft mechanism 100 is connected between the first housing 303 and the second housing 305. In order to enable the first housing 303 and the second housing 305 to receive uniform force when rotating, the number of the rotating shaft assemblies 10 and that of the guide assemblies 30 are both two. The two rotating shaft assemblies 10 are respectively disposed on both side edges of the housing assembly 300. For example, one of the rotating shaft assemblies 10 may be disposed on a top side of the housing assembly 300, and the other rotating shaft assembly 10 may be disposed on a bottom side of the housing assembly 300. The two guide assemblies 30 and the two rotating shaft assemblies 10 are arranged correspondingly. In this way, when the housing assembly 300 is folded, the first housing 303 and the second housing 305 can rotate stably, improving the stability of the electronic device 500 and improving the operating feel of the user. It should be understood that the above-mentioned top side is defined in a more common placement method of the electronic device 500 in use, and the "top side" refers to a portion near an upper edge of the electronic device 500, and the "bottom side" refers to a portion near a lower edge of the electronic device 500.

Further, in the embodiments, the rotating shaft mechanism 100 further includes a screen support assembly 50 that extends along an inside of the housing assembly 300 and has two ends connected to the two rotating shaft assemblies 10 respectively. The screen support assembly 50 is configured to support the foldable screen 200. In the embodiments, the screen support assembly 50 includes a first support 52 and a second support 54.

Refer to FIG. 3 and FIG. 5, the first support 52 has a substantially plate-like structure, which is connected to the rotating shaft bracket 14 through a rotating shaft 521 and is capable of rotating relative to the rotating shaft bracket 14. A side of the first support 52 away from the rotating shaft 521 is movably connected to the first rotating arm 161 to enhance the structural stability of the first support 52. Further, a side of the first support 52 near the first rotating arm 161 is arranged with a first connecting portion 523. The first connecting portion 523 is movably connected to the first rotating arm 161. Correspondingly, the first rotating arm 161 defines a first guide groove 1611. The first connecting portion 523 may movably protrude into the first guide groove 1611 and slide along an extending direction of the first guide groove 1611. In the embodiments, the first connecting portion 523 is substantially fan-shaped, the first guide groove 1611 is substantially fan-shaped. The first guide groove 1611 penetrates the first rotating arm 161 substantially in the rotating axis direction of the rotating shaft 521. The arc of the fan shape of the first guide groove 1611 is greater than that of the first connecting portion 523, such that the first connecting portion 523 may slide along the arc of the fan shape in the first guide groove 1611. When the first rotating arm 161 drives the first support 52 to rotate relative to the rotating shaft bracket 14, the first connecting portion 523 adaptively rotates in the first guide groove 1611 to avoid motion interference, increasing the flexibility of the rotating shaft mechanism 100, and supporting the foldable screen 200.

The structure of the second support 54 is substantially the same as the structure of the first support 52. The second support 54 is pivotally connected to the rotating shaft bracket 14 through a rotating shaft 541 and movably connected to an end of the second rotating arm 163 away from the rotating shaft bracket 14. The end of the second rotating arm 163 away from the rotating shaft bracket 14 defines a second guide groove 1631. The second support 54 is arranged with a second connecting portion 543, which may movably protrude into the second guide groove 1631.

Further, in the embodiments, the rotating shaft mechanism 100 further includes a support plate 70 disposed between the first support 52 and the second support 54 and connected to the rotating shaft bracket 14. The support plate 70 is configured to support the foldable screen 200 and define an accommodating space, such that when the foldable screen 200 is folded, there is enough space to generate deformation in the predetermined direction. Specifically, in the embodiments shown in FIG. 5, the support plate 70 is generally a plate-like structure with depressions. The support plate 70 extends along the inside of the housing assembly 300, and two ends of the support plate 70 are respectively connected to the two rotating shaft assemblies 10. Further, the support plate 70 is connected to the rotating shaft bracket 14. The position of the through hole 141 of the rotating shaft bracket 14 is above a surface of the support plate 70, that is, the axis of the through hole 141 and the axis of the guide portion 323 are substantially parallel to the support plate 70. In this way, the guide portion 323 of the guide member 32 protrudes through the through hole 141 and may be located above the support plate 70 (for example, the guide portion 323 and the support plate 70 are relatively spaced apart), facilitating to guide the folding direction of the foldable screen 200 on the support plate 70.

Further, a side of the support plate 70 near the through hole 141 is arranged with a concave surface 72. The concave surface may form an accommodating portion 74. The accommodating portion 74 may provide a sufficient deformation space for the foldable screen 200. In the present embodiments, the concave surface 72 is substantially a part of an inner cylindrical surface extending along the surface of the support plate 70 to adapt to the folded shape of the foldable screen 200.

Referring to FIG. 2, the electronic assembly 400 includes a first electronic module 401, a second electronic module 403, and a flexible circuit board 405. The first electronic module 401 is disposed in the first housing 303, and the second electronic module 403 is disposed in the second housing 305. The flexible circuit board 405 is electrically connected to the first electronic module 401 and the second electronic module 403, respectively. Further, the first electronic module 401 may be a main board and a central processor, a memory, an antenna, a camera, a microphone, and the like arranged on the main board. The second electronic module 403 may also be composed of a printed circuit board and a functional module arranged on the printed circuit board. The second electronic module 403 may be different from the first electronic module 401. The second electronic module 403 may be a battery, a connector, or a fingerprint module, etc.

The foldable screen 200 is laid on the first housing 303, the rotating shaft mechanism 100 and the second housing 305 in sequence. In the embodiments, the foldable screen 200 includes a flexible display screen 201. The flexible display screen 201 is turned with the first housing 303 and the second housing 305 to be in the folded or unfolded state. The flexible display screen 201 is electrically connected to the electronic assembly 400 such that the electronic assembly 400 can control the operation of the flexible display screen 201.

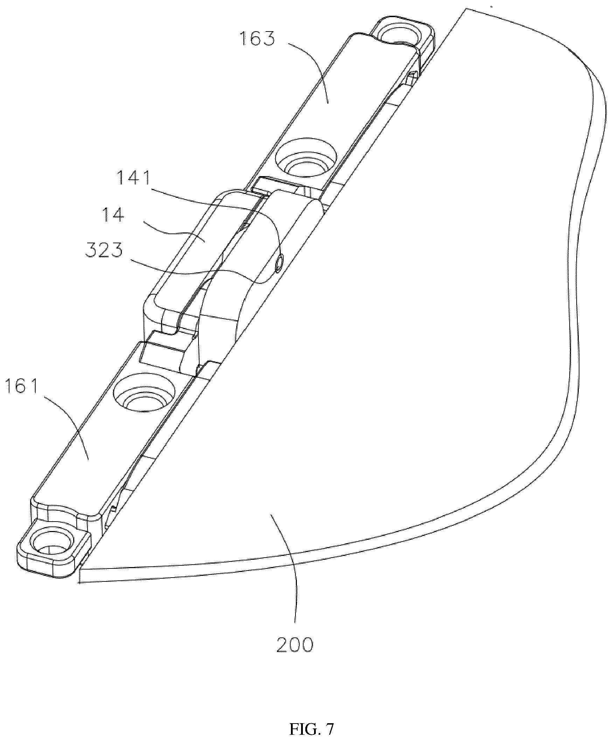

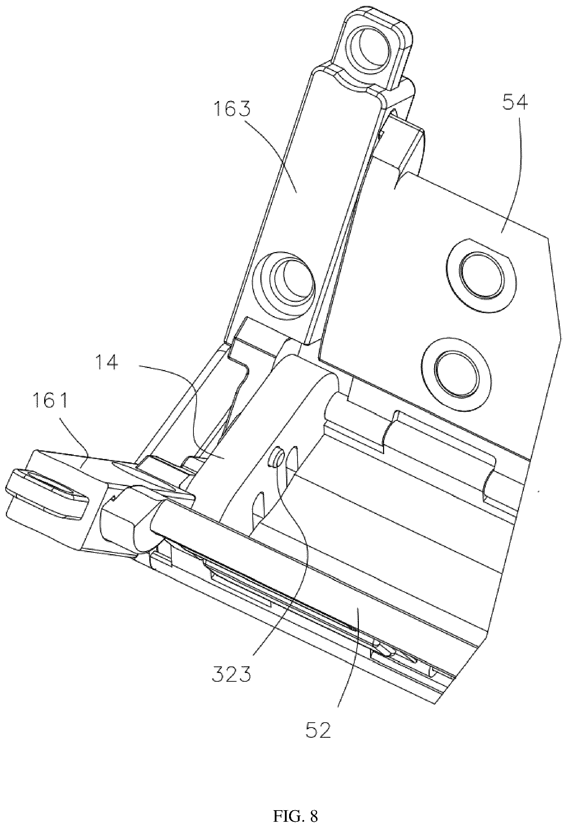

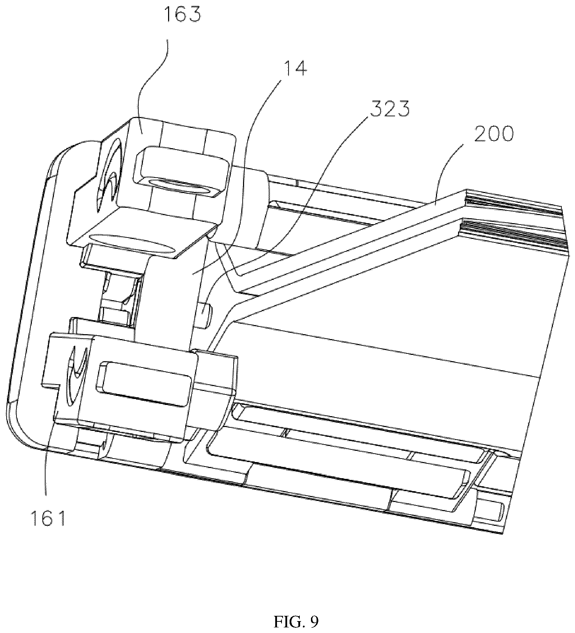

Further referring to FIGS. 5 to 7, in the electronic device 500 provided by the embodiments of the present disclosure, when the foldable screen 200 is disposed on the housing assembly 300 and the rotating shaft mechanism 100, the foldable screen 200 is stacked on the support plate 70 such that the support plate 70 may support the foldable screen 200. The position of the through hole 141 of the rotating shaft bracket 14 is above the surface of the foldable screen 200. That is, the axis of the through hole 141 and that of the guide portion 323 are substantially parallel to the foldable screen 200. The foldable screen 200 is disposed between the support plate 70 and the axis of the through hole 141. In this way, the guide portion 323 of the guide member 32 protrudes out of the through hole 141 and may be located above the foldable screen 200. The guide portion 323 may be opposite to the foldable screen 200 or may be in contact with the surface of the foldable screen 200 to guide the bending direction of the foldable screen 200. Specifically, referring to FIGS. 8 and 9, when the rotating shaft mechanism 100 is in the folded state, the foldable screen 200 is bent, and the guide portion 323 protrudes above the foldable screen 200 through the through hole 141 (that is, the guide portion 323 of the guide member 32 protrudes to the side of the foldable screen 200 facing away from the support plate 70). At this time, the guide member 32 can block the foldable screen 200 from being bent and deformed away from the support plate 70, forcing the foldable screen 200 to be concavely deformed toward the support plate 70. In this way, the deformation of the foldable screen 200 that does not conform to its bending tendency may be avoided, thereby guiding the bending direction of the foldable screen 200. Therefore, the above-mentioned rotating shaft mechanism 100 can protect the foldable screen 200 when the foldable screen 200 is folded, avoid the damage caused by irregular deformation of the foldable screen 200, and extend the service life of the foldable screen 200.

It can be understood that the electronic device 500 may be a multi-purpose mobile phone that realizes a small-screen display, a large-screen display, or a curved screen display, and presents multiple use functions. For example, when the flexible display screen 201 is in the folded state, the first housing 303 and the second housing 305 may be stacked together. The electronic device 500 may be utilized as a mobile phone, which is convenient for users to carry and takes up little space. When the flexible display screen 201 of the electronic device 500 is bent at a certain angle, the first housing 303 is unfolded relative to the second housing 305 and forms an angle with each other. The electronic device 500 may be utilized as a notebook computer. When the flexible display 201 of the electronic device 500 is in the unfolded state, the first housing 303 is unfolded relative to the second housing 305 and is flush with each other. The electronic device 500 may be utilized as a tablet computer to increase the display area and obtain more display content to improve user experience. Of course, the electronic device 500 may also be a multi-purpose tablet computer, a multi-purpose notebook computer, or other multi-function electronic devices with multiple mode switching.

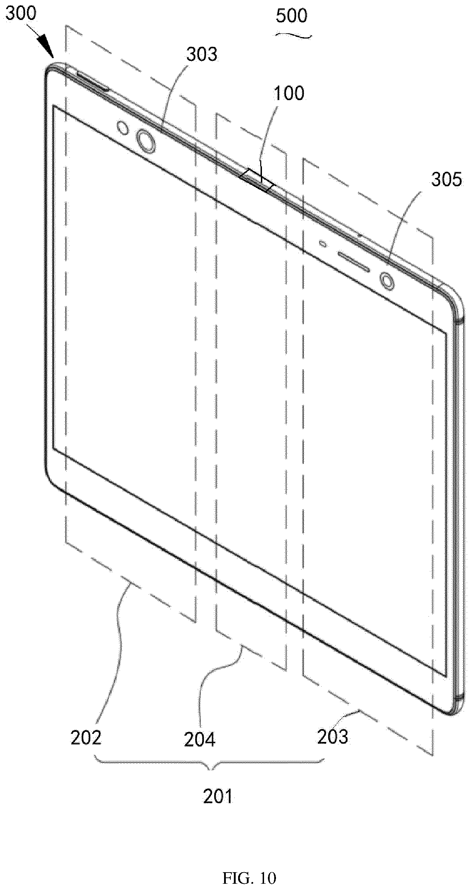

Further referring to FIG. 10, in the embodiments, the flexible display screen 201 includes a first display portion 202 attached to the first housing 303 (as shown in FIG. 3), a second display portion 203 attached to the second housing 305, and a bending display portion 204 connected to the first display portion 202 and the second display portion 203. The first display portion 202 and the second display portion 203 are relatively folded or unfolded with the first housing 303 and the second housing 305, respectively. The bending display section 203 is bent or unfolded as the first display section 202 is folded or unfolded relative to the second display section 203. In some embodiments, the first display portion 202, the second display portion 203, and the bending display portion 204 may be an integrated structure, such that the flexible display screen 201 is a one-piece flexible display screen. Or, in some other embodiments, the bending display portion 204 is a flexible portion that can be bent, whereas the first display portion 202 and the second display portion 203 may be non-flexible portions. The first display portion 202 and the second display portion 203 are folded or unfolded relatively via the bending display portion 204.

Further, the foldable screen 200 may further include a flexible light-transmitting cover plate (not shown in the figure) covering the flexible display screen 201. The flexible light-transmitting cover plate is attached to the flexible display screen 201. The periphery of the flexible light-transmitting cover plate is fixedly connected to the first housing 303 and the second housing 305. The flexible light-transmitting cover 41 is configured to protect the flexible display screen 201 and improve the appearance performance of the electronic device 500.

In the description of the specification, the description referring to the terms "an embodiment", "some embodiments", "examples", "specific examples", or "some examples" means that specific features, structures, materials, or characteristics described in connection with the embodiments or examples may be included in at least one embodiment or example of the present disclosure. In this specification, the schematic representation of the above terms does not necessarily refer to a same embodiment or example. Moreover, the specific features, structures, materials, or characteristics described may be combined in any suitable manner in any one or more embodiments or examples. In addition, without contradicting each other, a person skilled in the art may combine different embodiments or examples and features of the different embodiments or examples described in this specification.

In addition, the terms "first" and "second" are used for descriptive purposes only and shall not be understood as indicating or implying relative importance or implicitly indicating the number of technical features indicated. Thus, the features defined with "first" and "second" may include at least one of the features either explicitly or implicitly. In the description of the present disclosure, the meaning of "plurality" is at least two, such as two, three, etc., unless otherwise specifically limited.

Finally, it should be noted that the above embodiments are only to illustrate the technical solutions of the present disclosure, but not to limit them. Although the present disclosure has been described in detail with reference to the foregoing embodiments, a person skilled in the art should understand that modifications to the technical solutions described in the foregoing embodiments, or equivalent replacements to some of the technical features therein can be made. These modifications or replacements do not drive the essence of the corresponding technical solutions from the spirit and scope of the technical solutions of the embodiments of the present disclosure.

## Claims

1. A rotating shaft mechanism, applied to a foldable electronic device and comprising:
a rotating shaft bracket;
a guide member, movably connected to the rotating shaft bracket;
an elastic member, disposed between the guide member and the rotating shaft bracket; and
two rotating arms, rotatably arranged on opposite two ends of the rotating shaft bracket respectively; wherein at least one of the two rotating arms abuts against the guide member; when the two rotating arms rotate relative to the rotating shaft bracket and move closer to each other, the guide member is driven to protrude out of the rotating shaft bracket.

2. The rotating shaft mechanism according to claim 1, wherein the guide member comprises a body, and a guide portion connected to the body and slidingly cooperating with the rotating shaft bracket; a driven surface is arranged on a side of the body facing away from the guide portion; at least one of the two rotating arms abuts against the driven surface.

3. The rotating shaft mechanism according to claim 2, wherein the rotating shaft bracket defines a guide hole; the guide portion is slidingly arranged in the guide hole.

4. The rotating shaft mechanism according to claim 2 or 3, wherein the guide portion is a convex column structure protruding and formed on a surface of the body; the guide portion is movably penetrated on the rotating shaft bracket.

5. The rotating shaft mechanism according to any one of claims 2-4, wherein the driven surface is flat; an included angle between the driven surface and a sliding direction of the guide member is acute.

6. The rotating shaft mechanism according to any one of claims 2-5, wherein the driven surface comprises a first driven surface and a second driven surface; the first driven surface and the second driven surface are symmetrically disposed on the body; the two rotating arms abut against the first driven surface and the second driven surface respectively.

7. The rotating shaft mechanism according to claim 6, wherein an included angle between the first driven surface and the second driven surface is obtuse.

8. The rotating shaft mechanism according to any one of claims 2-7, wherein the elastic member is disposed between the body and the rotating shaft bracket; the elastic member comprises at least two coil springs; the at least two coil springs are disposed on both sides of the guide portion respectively.

9. The rotating shaft mechanism according to any one of claims 2-8, wherein the guide member further comprises a positioning portion; the positioning portion is a convex pillar structure connected to the body; the elastic member is sleeved on the positioning portion.

10. The rotating shaft mechanism according to any one of claims 1-9, wherein the rotating shaft mechanism further comprises a first support and a second support; the first support and the second support are rotatably connected to the rotating shaft bracket.

11. The rotating shaft mechanism according to claim 10, wherein the two rotating arms comprise a first rotating arm and a second rotating arm; a side of the first support away from the rotating shaft bracket is connected to the first rotating arm; a side of the second support away from the rotating shaft bracket is connected to the second rotating arm.

12. The rotating shaft mechanism according to claim 11, wherein an end of the first rotating arm away from the rotating shaft bracket defines a first guide groove, the first support is arranged with a first connecting portion, and the first connecting portion is movably received in the first guide groove; an end of the second rotating arm away from the rotating shaft bracket defines a second guide groove, the second support is arranged with a second connecting portion, and the second connecting portion is movably received in the second guide groove.

13. The rotating shaft mechanism according to any one of claims 10-12, further comprising a support plate disposed between the first support and the second support and connected to the rotating shaft bracket; wherein the guide member is driven by the two rotating arms to protrude out of the rotating shaft bracket and to be relatively spaced apart with the support plate.

14. The rotating shaft mechanism according to claim 13, wherein a side of the support plate towards the guide member is recessed to form an accommodating portion.

15. The rotating shaft mechanism according to any one of claims 1-14, further comprising a fixing member disposed on a side of the two rotating arms facing away from the rotating shaft bracket; wherein the two rotating arms are rotatably connected to the fixing member respectively.

16. The rotating shaft mechanism according to claim 15, wherein a side of the rotating shaft mechanism towards the fixing member defines a receiving groove; the guide member and the elastic member are arranged in the receiving groove.

17. A foldable electronic device, comprising:
a rotating shaft mechanism according to any one of claims 1-16; wherein the rotating shaft mechanism further comprises a support plate connected to the rotating shaft bracket;
a first housing and a second housing; wherein the first housing and the second housing are connected to the two rotating arms respectively; the first housing and the second housing are in a folded state or an unfolded state through a rotation of the two rotating arms; and
a foldable screen, connected to the first housing and the second housing, and stacked on the support plate; wherein when the first housing and the second housing are in the folded state through the relative rotation of the two rotating arms, the guide member is driven by at least one of the two rotating arms to protrude to a side of the foldable screen facing away from the support plate.

18. The foldable electronic device according to claim 17, wherein an end of the guide member is movably penetrated on the rotating shaft bracket; when the first housing and the second housing are in the folded state through the relative rotation of the two rotating arms, the end of the guide member protrudes out of the rotating shaft bracket and is disposed opposite to a display surface of the foldable screen.

19. The foldable electronic device according to claim 17 or 18, wherein the guide member is movably penetrated on the rotating shaft bracket; when the first housing and the second housing are in the unfolded state through the relative rotation of the two rotating arms, the end of the guide member retracts and resets into the rotating shaft bracket.

20. A rotating shaft mechanism, applied to a foldable electronic device and comprising:
a rotating shaft bracket;
a guide member, movably connected to the rotating shaft bracket;
an elastic member, disposed between the guide member and the rotating shaft bracket;
two rotating arms, rotatably arranged on opposite two ends of the rotating shaft bracket respectively; wherein the two rotating arms are capable of rotating relative to the rotating shaft bracket to be in a folded state or an unfolded state; at least one of the two rotating arms abuts against the guide member; and
a support plate, connected to the rotating shaft bracket; wherein when the two rotating arms rotate relatively to be in the folded state, the guide member is driven to protrude out of the rotating shaft bracket and to be relatively spaced apart with the support plate.
